# EUROPÄISCHE PATENTSCHRIFT

(11) **EP 0 916 533 B1**
(45) Veröffentlichungstag und Bekanntmachung des Hinweises auf die Patenterteilung: **27.11.2002**
(21) Anmeldenummer: 98116901.4
(22) Anmeldetag: 08.09.1998
(51) Int. Cl.: B60J 3/02

(54) **Sonnenblende für Kraftfahrzeuge**
Sun visor for motor vehicles
Pare-soleil pour véhicules à moteur

(30) Priorität: 11.11.1997 DE 19749795
(43) Veröffentlichungstag der Anmeldung: 19.05.1999
(73) Patentinhaber: Johnson Controls Interiors GmbH & Co. KG, 42285 Wuppertal (DE)
(72) Erfinder: Delus, Christian, 43040 Saro (SE); Agro, Marc, 57500 Saint Avold (FR)
(74) Vertreter: Hemmelmann, Klaus

(56) Entgegenhaltungen:
- DE-A- 2 925 184
- US-A- 2 583 306
- US-A- 3 403 937
- US-A- 5 040 840
- US-A- 5 158 334
- US-A- 5 538 310

## Beschreibung

Die Erfindung bezieht sich auf eine Sonnenblende für Kraftfahrzeuge, insbesondere Nutzfahrzeuge, die vornehmlich zur Anordnung im Längsseitenbereich des Fahrerhauses bestimmt ist und einen Sonnenblendenkörper aufweist, der über zwei Lagerböcke verfügt, um eine etwa horizontale Achse verschwenkbar ist und über die Lagerböcke entlang einer zur Schwenkachse parallelen Führungsschiene, die ein im Querschnitt nach der Sichtseite offenes C-förmiges Profil aufweist, verschiebbar geführt ist.

Bei einer durch die DE 29 25 184 A1 bekanntgewordenen Sonnenblende der gattungsgemäßen Art, haben sich im praktischen Gebrauch Probleme hinsichtlich der Schiebeführung ergeben. Aus Gründen von Toleranzschwankungen, wie auch Wärme- und Kältebelastungen, ist es bei der bekannten Ausführungsform nicht möglich, den Sonnenblendenkörper leichtgängig zu verschieben und dennoch zuverlässig zu verhindern, daß sich der Sonnenblendenkörper ungewollt längs der Führungsschiene verschiebt.

Der Erfindung liegt hiernach die Aufgabe zugrunde, eine Sonnenblende der eingangs genannten Art qualitätsmäßig zu verbessern und insbesondere Vorsorge dafür zu treffen, daß der Sonnenblendenkörper trotz unvermeidlicher Fertigungstoleranzen und Temperaturbelastungen leichtgängig entlang der Führungsschiene verschiebbar ist, ohne daß eine selbsttätige Verschiebbarkeit möglich ist.

Diese Aufgabe wird erfindungsgemäß dadurch gelöst, daß die Lagerböcke mit ihren dem Sonnenblendenkörper abgewandten Enden an einem in der Führungsschiene geführten, aus Kunststoff bestehenden Schlitten angeordnet sind und daß der Schlitten an seinen in der Verschieberichtung verlaufenden Rändern mehrere sich in der Führungsschiene abstützende Gleitleisten aufweist, die an einem dieser Ränder als jeweils einstückig mit dem Schlitten verbundene, nach außen gewölbte Federbrücken ausgebildet sind, wobei sich zwischen jeder Federbrücke und dem benachbarten Schlittenrand ein Freiraum befindet, in dem eine die Federbrücke nach außen belastende Feder angeordnet ist.

Der Einsatz eines aus Kunststoff bestehenden Schlittens verursacht keine nennenswerten Kosten, zumal sich daran die Federbrücken ohne besonderen Aufwand einstückig und materialeinheitlich anformen lassen. Die nach außen gewölbten Federbrücken stellen schon für sich eine wesentliche toleranzausgleichende Qualitätsverbesserung dar, welche noch durch die, jeder Federbrücke zugeordnete Feder optimiert wird, weil eine aus Federstahl oder Federdraht bestehende Feder auf Temperaturbelastungen weit weniger heftig reagiert als eine aus Kunststoff gebildete Federbrücke. Die erfindungsgemäßen Maßnahmen führen zu definierten Reibungsverhältnissen und zum zuverlässigen Ausgleich vorhandener Toleranzen.

Bevorzugterweise verfügt der Schlitten über zwei nahe seiner Längsenden angeordnete Federbrücken, womit sich eine sichere, verkantungsfreie Verschiebbarkeit ergibt.

Die die Federbrücken belastende Federn sind zweckmäßigerweise Schraubendruckfedern. Solche Federn, die aus Federdraht gebildet sind, lassen sich kostengünstig bereitstellen und auch schnell und einfach montieren.

Gemäß einer Weiterbildung der Erfindung kann vorgesehen sein, daß an der Rückseite jeder Federbrücke sowie an dem der Federbrücke zugewandten Rand jedes Freiraums Zapfen zur Positionierung und Halterung der Federn angeformt sind.

Schließlich kann vorgesehen sein, daß die Führungsschiene endseitige, als Schiebewegbegrenzungsmittel dienende Verriegelungskappen aufweist.

Ein Ausführungsbeispiel der Erfindung wird nachfolgend anhand der Zeichnungen näher erläutert, und es zeigen
- Fig. 1: eine Zusammenbauansicht der kompletten Sonnenblende,
- Fig. 2: eine Explosionsdarstellung der Sonnenblende nach Fig. 1,

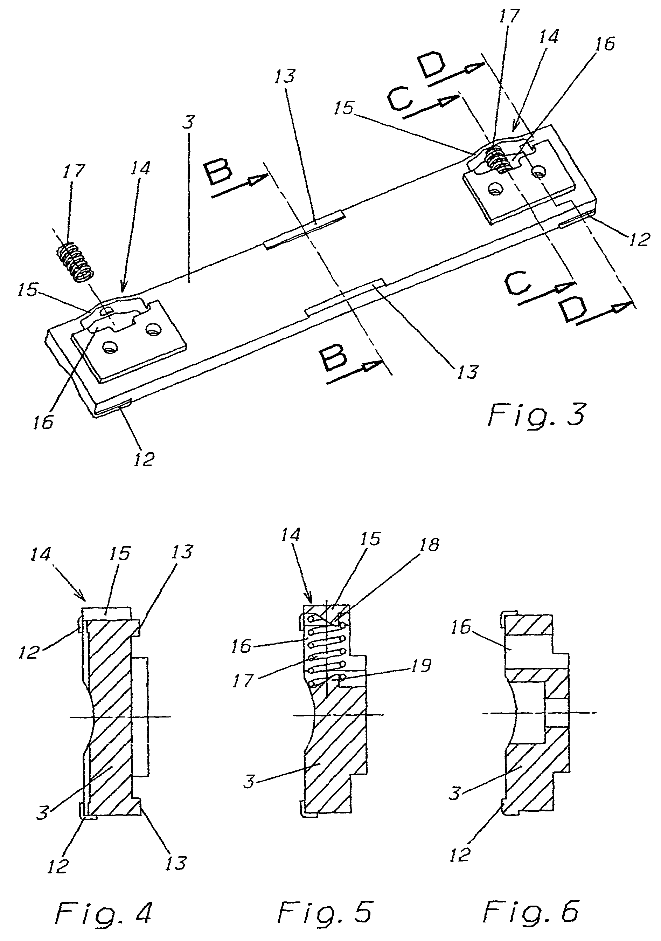

- Fig. 3: eine Einzelheit der Sonnenblende,
- Fig. 4: einen Schnitt B - B nach Fig. 3,
- Fig. 5: einen Schnitt C - C nach Fig. 3 und
- Fig. 6: einen Schnitt D - D nach Fig. 3.

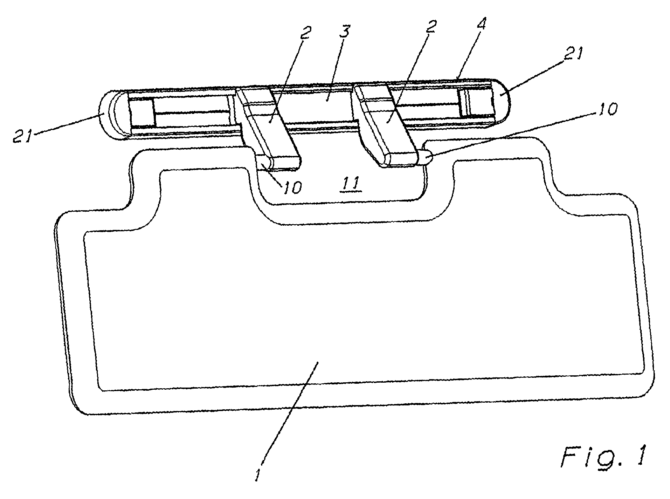

Die Sonnenblende nach Fig. 1 umfaßt einen Sonnenblendenkörper 1, zwei Lagerböcke 2, einen Schlitten 3 und eine den Schlitten 3 aufnehmende Führungsschiene 4.

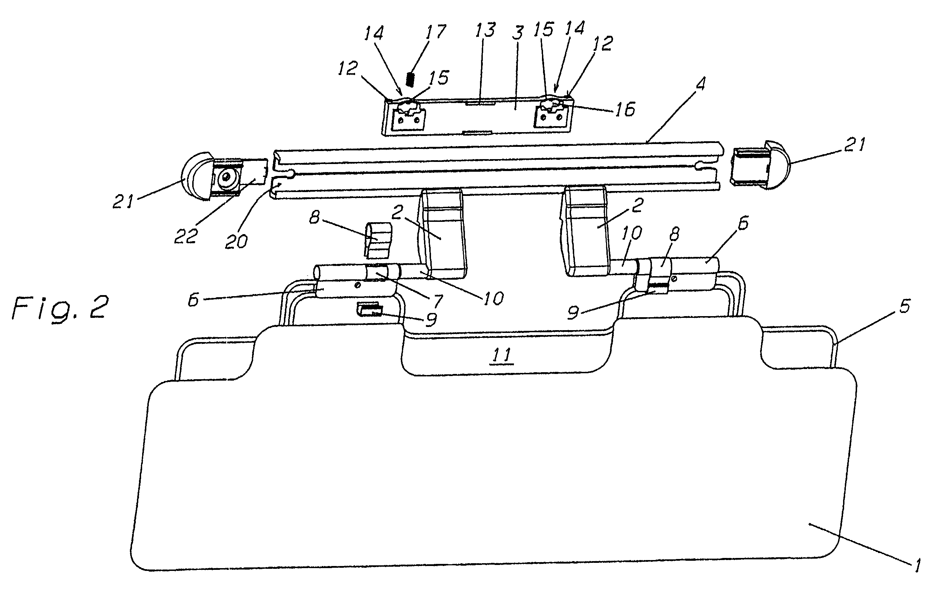

Wie Fig. 2 erkennen läßt, weist der Sonnenblendenkörper 1 einen aus einem gebogenen Drahtabschnitt gebildeten Metallrahmen 5 auf. An dem Metallrahmen 5 sind zwei Klemmlager 6 mit je einer Fensteröffnung 7 befestigt. Die Klemmlager 6 sind jeweils von einer Klemmfeder 8 reiterartig umgriffen und die U-förmigen Klemmfedern 8 sind untenendig durch aufgesetzte Klammern 9 gesichert.

In die Klemmlager 6 greifen Achsen 10 ein, die an den Lagerböcken 2 angeordnet sind und die Achsen 10 bilden miteinander eine horizontal ausgerichtete Drehachse, um die der Sonnenblendenkörper 1 schwenkbar ist. Zweckmäßigerweise sind die Lagerböcke 2 Kunststoff-Spritzgußkörper mit daran jeweils einstückig angeformter Achse 10. Die Lageröffnungen der Klemmlager 6 gehen von seitlichen Begrenzungen einer im Längsmittenbereich des Sonnenblendenkörpers 1 angeordneten Ausnehmung 11 aus, in die die Lagerböcke 2 bereichsweise hineinragen.

Die Lagerböcke 2 sind mit ihren den Achsen 10 abgewandten Endbereichen mit Hilfe nicht dargestellter Befestigungselemente an dem Schlitten 3 befestigt. Die Befestigungselemente können z. B. Schrauben sein.

Der Schlitten 3 ist ein Kunststoff-Spritzgußteil von etwa rechteckiger Form. An seinen in der Verschieberichtung verlaufenden Rändern weist der Schlitten 3 mehrere sich in der Führungsschiene 4 abstützende Gleitleisten 12, 13 und 14 auf. Während die Gleitleisten 12 und 13 starr am Schlitten 3 angeformt sind, sind die Gleitleisten 14 als nach außen gewölbte Federbrücken 15 ausgebildet. Zwischen jeder Federbrücke 15 und dem dieser benachbarten Rand des Schlittens 3 befindet sich ein fensterartiger Freiraum 16. Die Federbrücken 15 bilden federnde Vorsprünge. Zur Unterstützung der Federbrücken 15 sind in den Freiräumen 16 Federn 17 angeordnet. Die Federn 17 sind vorzugsweise Schraubendruckfedern, die sich einendig an den Federbrücken 15 und anderendig an den diesen benachbarten Rändern des Schlittens 3 abstützen. Zur Positionierung und Halterung sind an der Rückseite jeder Federbrücke 15, wie auch an der diesen gegenüberliegenden Wandung miteinander fluchtende Zapfen 18, 19 angeformt. Die Zapfen 18, 19 sollten, wie dargestellt angeschrägt sein, um die Montage zu vereinfachen. Die Federbrücken 15 werden durch die Federn 17 im Verhältnis zu der gewünschten Schiebekraft unter Spannung gesetzt.

Der so komplettierte Schlitten 3 wird dann in die Führungsöffnung 20 der Führungsschiene 4, die z. B. aus Leichtmetall besteht, eingeschoben. Alsdann wird die Führungsschiene 4 durch Endkappen 21 verriegelt, und zwar mittels nicht gezeigter Befestigungsschrauben, welche durch einen angeformten Materiallappen 22 verdeckt werden können. Der Sonnenblendenkörper 1 kann, da der Schlitten 3 wesentlich kürzer als die Führungsschiene 4 ist nun parallel zur Führungsschiene 4 verschoben und natürlich auch um die beiden miteinander fluchtenden Achsen 10 verschwenkt werden. Wie Versuche ergeben haben, genügt die neue Sonnenblende in optimaler Weise den von der Abnehmerschaft vorgegebenen technischen Anforderungen und wird auch den ästhetischen Anforderungen der Benutzerschaft vollauf gerecht.

## Patentansprüche

1. Sonnenblende für Kraftfahrzeuge, insbesondere Nutzfahrzeuge, die vornehmlich zur Anordnung im Längsseitenbereich des Fahrerhauses bestimmt ist und einen Sonnenblendenkörper (1) aufweist, der über zwei Lägerböcke (2) verfügt, um eine etwa horizontale Achse verschwenkbar ist und über die Lagerböcke (2) entlang einer zur Schwenkachse parallelen Führungsschiene (4), die ein im Querschnitt nach der Sichtseite offenes C-förmiges Profil aufweist, verschiebbar geführt ist, wobei die Lagerböcke (2) mit ihren dem Sonnenblendenkörper (1) abgewandten Enden an einem in der Führungsschiene (4) geführten, aus Kunststoff bestehenden Schlitten (3) angeordnet sind, **dadurch gekennzeichnet daß** der Schlitten (3) an seinen in der Verschieberichtung verlaufenden Rändern mehrere, sich in der Führungsschiene (4) abstützende Gleitleisten (12, 13, 14) aufweist, die an einem dieser Ränder als jeweils einstückig mit dem Schlitten (3) verbundene, nach außen gewölbte Federbrücken (15) ausgebildet sind, wobei sich zwischen jeder Federbrücke (15) und dem benachbarten Schlittenrand ein Freiraum (16) befindet, in dem eine die Federbrücke (15) nach außen belastende Feder (17) angeordnet ist.

2. Sonnenblende nach Anspruch 1, **dadurch gekennzeichnet, daß** der Schlitten (3) über zwei nahe seiner Längsenden angeordnete Federbrücken (15) verfügt.

3. Sonnenblende nach Anspruch 1 oder 2, **dadurch gekennzeichnet, daß** die die Federbrücken (15) belastende Federn (17) Schraubendruckfedern sind.

4. Sonnenblende nach wenigstens einem der Ansprüche 1 bis 3, **dadurch gekennzeichnet, daß** an der Rückseite jeder Federbrücke (15) sowie an dem der Federbrücke (15) zugewandten Rand jedes Freiraums (16) Zapfen (18, 19) zur Positionierung und Halterung der Federn (17) angeformt sind.

5. Sonnenblende nach wenigstens einem der Ansprüche 1 bis 4, **dadurch gekennzeichnet, daß** die Führungsschiene (4) endseitige Verriegelungskappen (21) aufweist.

## Claims

1. Sun visor for motor vehicles, in particular commercial vehicles, which is intended predominantly for arranging in the longitudinal side region of the driver's cab and has a sun-visor body (1), which has two bearing supports (2), can be pivoted about an approximately horizontal axis and is guided, via the bearing supports (2), such that it can be displaced along a guide rail (4), which is parallel to the pivot axis and has a cross-sectionally C-shaped profile which is open in the direction of the visible side, the bearing supports (2) having their ends which are directed away from the sun-visor body (1) arranged on a slide (3) which is guided in the guide rail (4) and consists of plastic, **characterized in that**, on its edges which run in the displacement direction, the slide (3) has a plurality of sliding strips (12, 13, 14), which are supported in the guide rail (4) and are formed, on one of these edges, as outwardly curved resilient bridges (15) which are each connected integrally to the slide (3), a free space (16) being located between each resilient bridge (15) and the adjacent slide edge and containing a spring (17) which subjects the resilient bridge (15) to loading in the outward direction.

2. Sun visor according to Claim 1, **characterized in that** the slide (3) has two resilient bridges (15) arranged in the vicinity of its longitudinal ends.

3. Sun visor according to Claim 1 or 2, **characterized in that** the springs (17), which subject the resilient bridges (15) to loading, are helical compression springs.

4. Sun visor according to at least one of Claims 1 to 3, **characterized in that** lugs (18, 19) for positioning and securing the springs (17) are integrally formed on the rear side of each resilient bridge (15) and on that edge of each free space (16) which is directed towards the resilient bridge (15).

5. Sun visor according to at least one of Claims 1 to 4, **characterized in that** the guide rail (4) has locking caps (21) at the ends.

## Revendications

1. Pare-soleil pour véhicules à moteur, en particulier véhicules utilitaires, qui est essentiellement prévu pour être disposé dans la région du côté longitudinal de l'habitacle et qui présente un corps de pare-soleil (1) qui comprend deux blocs de support (2), peut pivoter autour d'un axe approximativement horizontal et est guidé de manière déplaçable par le biais des blocs de support (2) le long d'une glissière (4) parallèle à l'axe de pivotement, qui présente un profilé en forme de C ouvert vers le côté visible en section transversale, les blocs de support (2) étant disposés avec leurs extrémités opposées au corps de pare-soleil (1) sur un chariot (3) en plastique, guidé dans la glissière (4), **caractérisé en ce que** le chariot (3) présente, sur ses bords s'étendant dans la direction de coulissement, plusieurs listels de glissement (12, 13, 14) prenant appui dans la glissière (4), qui sont réalisés sur l'un de ces bords en tant que ponts élastiques courbés vers l'extérieur (15), reliés d'une pièce au chariot (3), un espace libre (16) dans lequel est disposé un ressort (17) sollicitant vers l'extérieur le pont élastique (15) se trouvant entre chaque pont élastique (15) et le bord adjacent du chariot.

2. Pare-soleil selon la revendication 1, **caractérisé en ce que** le chariot (3) comprend deux ponts élastiques (15) disposés à proximité de ses extrémités longitudinales.

3. Pare-soleil selon la revendication 1 ou 2, **caractérisé en ce que** les ressorts (17) sollicitant les ponts élastiques (15) sont des ressorts de compression cylindriques.

4. Pare-soleil selon au moins l'une des revendications 1 à 3, **caractérisé en ce qu'**au dos de chaque pont élastique (15) ainsi que sur le bord de chaque espace libre (16) tourné vers le pont élastique (15), sont formés des tourillons (18, 19) pour le positionnement et la fixation des ressorts (17).

5. Pare-soleil selon au moins l'une des revendications 1 à 4, **caractérisé en ce que** la glissière (4) présente, du côté de ses extrémités, des capuchons de verrouillage (21).
